# EUROPÄISCHE PATENTSCHRIFT

(11) **EP 1 370 443 B1**
(45) Veröffentlichungstag und Bekanntmachung des Hinweises auf die Patenterteilung: **25.08.2004**
(21) Anmeldenummer: 01925419.2
(22) Anmeldetag: 12.03.2001
(51) Int. Cl.: B60R 1/072

(54) **MOTORISCHE VERSCHWENKEINRICHTUNG FÜR EINE TRÄGER-PLATTE INSBESONDERE ZUR AUFNAHME EINES KRAFTFAHRZEUGSPIEGELS**
MOTOR-DRIVEN PIVOTING DEVICE FOR A SUPPORT PLATE, ESPECIALLY THE SUPPORT PLATE OF A MOTOR VEHICLE MIRROR
DISPOSITIF DE PIVOTEMENT MOTORISE POUR UNE PLAQUE SUPPORT, SERVANT EN PARTICULIER A LOGER UN RETROVISEUR DE VEHICULE AUTOMOBILE

(43) Veröffentlichungstag der Anmeldung: 17.12.2003
(73) Patentinhaber: Oechsler Aktiengesellschaft, 91522 Ansbach (DE)
(72) Erfinder: WOLF, Wilhelm, 91580 Petersaurach (DE); BOEGELEIN, Josef, 91623 Sachsen (DE); SEIBOTH, Wolfgang, 94438 Bad Windsheim (DE); LANG, Heinrich, 91465 Ergersheim (DE)
(74) Vertreter: Führing, Dieter
(86) Internationale Anmeldenummer: PCT/EP2001/002720
(87) Internationale Veröffentlichungsnummer: WO 2002/072386

(56) Entgegenhaltungen:
- WO-A-00/69683
- WO-A-98/31565
- DE-A- 10 006 220
- DE-A- 19 919 526
- DE-A- 19 919 527
- DE-A- 19 919 528
- DE-A- 19 919 529
- DE-U- 20 017 163

## Beschreibung

Die Erfindung betrifft eine motorische Verschwenkeinrichtung gemäß dem Oberbegriff des Hauptanspruches.

Eine Verschwenkeinrichtung dieser Gattung ist aus der WO 00 / 69683 A1 in der Bauform eines starr in die - dort halbkugelförmige - Ausbauchung der Träger-Platte eingesetzten Geräteträgers bekannt, dessen Getriebemotor mit einem kurzen Verzahnungsbogen in Eingriff steht, der sich quer zu einer Kugelflächenerzeugenden erstreckt und längs dieser verschiebbar ist. Das bedingt allerdings den Nachteil ungünstigen Kraftflusses, weil die Richtung des Verzahnungseingriffes mit der Verlagerung des Verzahnungsbogens wandert. Ungünstig ist ferner, daß der Geräteträger mit der Spiegel-Platte der ortsfesten Halterung gegenüber verschwenkt wird, was die Kabelanschlüsse zum Betrieb des Getriebemotors und für andere elektrische Funktionen (wie zur Stellungs-Rückmeldung und zum Heizen der Spiegelfläche) gefährdet. Die Bewegung der halbkugelförmig geschlossenen Trägerplatten-Ausbauchung gegenüber der sie aufnehmenden, ortsfesten Montagekappe wird durch Zwischenlage einer Schale zwangsgeführt, die über entsprechend verlaufenden Rippen einerseits mit der innerhalb ihrer verschwenkbaren Ausbauchung und andererseits mit der außerhalb ihrer verschwenkbaren Montagekappe radial verrastet ist. Das allerdings bedarf erheblichen Fertigungsaufwandes für Sicherstellung des exakten Verlaufes der Führungsnuten beiderseits der Führungsschale und vermeidet doch nicht große Reibungsverluste insbesondere bei kinematisch ungünstigen räumlichen Winkelstellungen zwischen Träger-Platte und Montagekappe.

Konstruktiv weniger aufwendig dagegen ist eine Anordnung des wieder im Innern einer wieder halbkugelförmigen Trägerplatten-Ausbauchung gelegenen, nun aber ihr gegenüber verschwenkbaren Geräteträgers nach WO 98 / 31565 A1, der hier zugleich durch eine Öffnung in der Hohlkugel hindurch der gerätefesten Montage der Verschwenkeinrichtung dient. Weil der Getriebemotor durch einen Schlitz im Geräteträger hindurch gegen eine Verzahnung längs der Innenmantelfläche der Ausbauchung radial in Eingriff steht, muß für eine diametral gegenüberliegende dreidimensionale Lagerung im Schwenkpunkt unter dem Zentrum der Träger-Platte durch eine hohlkugelausschnittförmige Begrenzung des Geräteträgers gesorgt werden, was den zulässigen Schwenkwinkel sehr einschränkt.

Dieses Konstruktionsprinzip wurde dann aufgenommen und gemäß DE 2 00 17 163 U1 in Kombination mit der darin zitierten DE 1 99 19 529 A1 zu einer Spannbandlösung weiterentwickelt, bei der zwei kreuzweise unter elastischer Vorspannung am Rand der Träger-Platte befestigte Verzahnungsbänder den unter Reibschluß darin liegenden halbkugelförmigen Geräteträger radial gegen die dreidimensionale Lagerung im Schwenkpunkt unter dem Zentrum der Träger-Platte andrücken. Das allerdings reduziert die Führungsflächen im wesentlichen auf die vergleichsweise schmalen Spannbänder und erbringt deshalb nicht die grundsätzlich zu fordernden konstruktiven Sicherheiten möglichst großflächiger Führungspaarungen.

Eine Verschwenkeinrichtung ganz anderer Art ist aus der EP 0 316 055 vorbekannt in der Bauform eines Gehäuses zur Aufnahme von je einem reversierbaren elektrischen Kleinmotor für den koordinierten Antrieb von zwei stößelartigen Linearstellgliedern, die gegensinnig bezüglich einander aus dem Gehäuse heraus bzw. in dieses eingefahren werden. Dadurch verschwenken sie eine Trägerplatte um eine Achse mittig quer zur Verbindungslinie zwischen beiden Linearstellgliedern. Die Bewegungsübertragung vom Motor zum ihm zugeordneten Linear-Stellglied erfolgt jeweils mittels eines Schneckentriebs auf der Motorwelle, der eine am Gehäuse axial festgelegte Nuß über ihr Außengewinde verdreht und dadurch das Steilglied linear verlagert, weil dessen Außengewinde nach Art eines Gewindebolzens mit dem Innengewinde der Nuß in Eingriff steht.

Das Erfordernis, für diese einfache Schwenkbewegung einer Spiegel-Trägerplatte um eine Schwenkachse gleich zwei gegensinnig koordiniert wirkende motorische Antriebe einsetzen zu müssen, ist allerdings sehr kostenaufwendig. Außerdem ist die Betriebszuverlässigkeit infolge der Gefahr nicht genau synchronen Betriebes beeinträchtigt; denn wenn die beiden Linearstellglieder von ihren Motoren nicht exakt gegensinnig bewegt werden, dann erfolgt keine reproduzierbare Verschwenkbewegung der Trägerplatte um eine gerätefest geometrisch vorgegebene Achse, sondern diese Schwenkachse erfährt einen seitlichen Versatz.

Vorliegender Erfindung liegt das technische Problem zugrunde, eine gattungsgemäße Verschwenkeinrichtung bei kompakterem Aufbau mit geringerem Aufwand an Einzelteilen und funktional robuster auszulegen. Zugleich soll die Verschwenkeinrichtung - abgesehen von einer Integrationsmöglichkeit elektrischer Anschlüsse für den Schwenkmotor - dafür geeignet sein, sie problemlos auf ein System mit zwei zueinander orthogonalen Schwenkachsen erweitern zu können.

Diese Aufgabe ist erfindungsgemäß dadurch gelöst, daß gemäß den wesentlichen im Hauptanspruch angegebenen Merkmalen motorisch eine Taumelbewegung auf einer Kugelfläche als großflächiger Abstützung für die Träger-Platte hervorrufbar wird.

Dafür ist eine bezüglich ihres Kugelmittelpunktes axial unsymmetrische Hohlkugelzone (auch als Hohlkugelschicht zu bezeichnen) in der Ebene ihres größeren Axialquerschnittes mit der quer zur Achse, also in dieser Querschnittsebene ausgerichteten Träger-Platte für insbesondere einen Spiegel ausgestattet. Diese Hohlkugelzone mitsamt ihrer Träger-Platte ruht verschwenkbar in einer objektfesten zweischaligen Halterung.

Bei deren äußerer Schale handelt es sich um einen haubenförmigen Hohlkugelabschnitt (auch als Hohlkugelsegment zu bezeichnen), vorzugsweise mit abgeplattetem äußerem Polbereich. Seiner Öffnung, welche die Hohlkugelzone hinter der Platte aufnimmt, gegenüber ist dieser äußere Hohlkugelabschnitt, vorzugsweise unter Einschluß eines flachen Elektronikgehäuses auf dem abgeflachten Polbereich, objektfest montierbar. Von der Umgebung des inneren Scheitelbereiches dieser äußeren Schale in Form des Hohlkugelabschnitts ragt wenigstens ein starr daran befestigter Sockel bis in den Bereich des Inneren der Hohlkugelzone hinein, wo er die innere, eine ebenfalls kugelzonenförmige, Schale trägt. Die Trägerplatten-Hohlkugelzone ruht also radial gehaltert zwischen der Innenwand des Hohlkugelabschnittes (als äußerer Schale) und der Außenwand der zentralen Kugelzone (als innerer Schale) und ist diesen gegenüber verschwenkbar.

Zum motorischen Verschwenken der Trägerplatten-Hohlkugelzone den beiden objektfest ineinander ruhenden Teilkugeln gegenüber ist bei der Träger-Platte die hohlkugelzonenförmige Innenwand mit wenigstens einem längs der Hohlkugelerzeugenden rippenförmig ins Kugelinnere vorstehenden Zahnsegment ausgestattet. Das greift radial in die zentrale hohle Kugelzone, die als Geräteträger dient, so hinein, daß dieses Zahnsegment mit einem im Geräteträger gelagerten Stellmotor getrieblich in Eingriff steht. Für beliebige Schwenkbewegungsrichtungen ist lediglich noch ein zweifes, orthogonal zum ersterwähnten orientiertes motorgetriebenes Zahnsegment an der Hohlkugelzone mit eigenem Verstellmotor im Geräteträger erforderlich. Über die Ansteuerung der beiden Motore im objektfesten Geräteträger kann die Träger-Platte dann den objektfesten Teilkugeln als der zweischaligen Halterung gegenüber in allen Raumrichtungen verschwenkt werden. Anschlagbegrenzt ist diese taumelnde Schwenkbewegung der Träger-Platte gegenüber der ortsfesten Zweischalen-Achse nur durch die axialen Bauhöhen der Teilkugeln, da ja die über ihre Zahnsegmente angetriebene Hohlkugelzone zwischen den beiden objektfesten Teilkugeln längs deren Innen- bzw. Außenkugelflächen verschwenkbar geführt ist. Weil die Motore dabei objektfest verbleiben, wird der Verzahungseingriff unter der Schwenkbewegung dadurch sichergestellt, daß die Zahnsegmente nicht starr sondern orthogonal zueinander jeweils um eine zur objektfesten Längsachse radiale Schwenkachse an das Innere der Hohlkugelzone angelenkt sind und dadurch immer parallel zur objektfesten Achse in den ebenfalls objektfesten Geräteträger eingreifen.

Diese verschwenkbare Kugelflächenlagerung erbringt wegen ihrer großflächigen Abstützung eine höhere und in allen räumlichen Orientierungen praktisch gleichbleibende Stabilität gegen unerwünschtes Verschwenken oder Vibrieren der Träger-Platte, verglichen mit herkömmlichen Vier- oder gar nur Zweipunktlagerungen.

Zur näheren Erläuterung der Erfindung sowie ihrer Abwandlungen und Weiterbildungen wird auf die Unteransprüche und auf nachstehende Beschreibung eines in der Zeichnung angenähert maßstabsgerecht aber auf das Funktionswesentliche abstrahiert skizzierten bevorzugten Ausführungsbeispiels zur erfindungsgemäßen Lösung verwiesen. In der Zeichnung zeigt in Schrägansicht :
- Fig.1: eine objektfest zu montierende zweischalige Halterung mit einem Hohlkugelabschnitt als äußerer Schale, in dem eine Spiegelträger-Platte mittels einer rückwärtigen Hohlkugelzone verschwenkbar gelagert ist,
- Fig.2: als innere, objektfest koaxial mit der äußeren Schale (Fig.1) verbindbare Schale der Halterung einen hohlkugelzonenförmigen Geräteträger zur Aufnahme der Motore für den Schwenkantrieb der Platte und

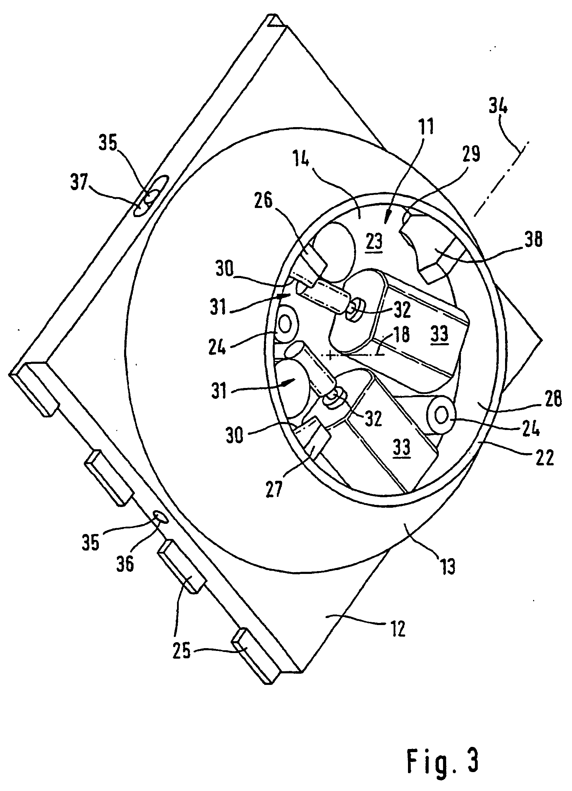

- Fig.3: die mit ihrer Hohlkugelzone auf dem Geräteträger gelagerte Träger-Platte, gegenüber Fig.1 bei abgenommener äußerer Schale der Halterung.

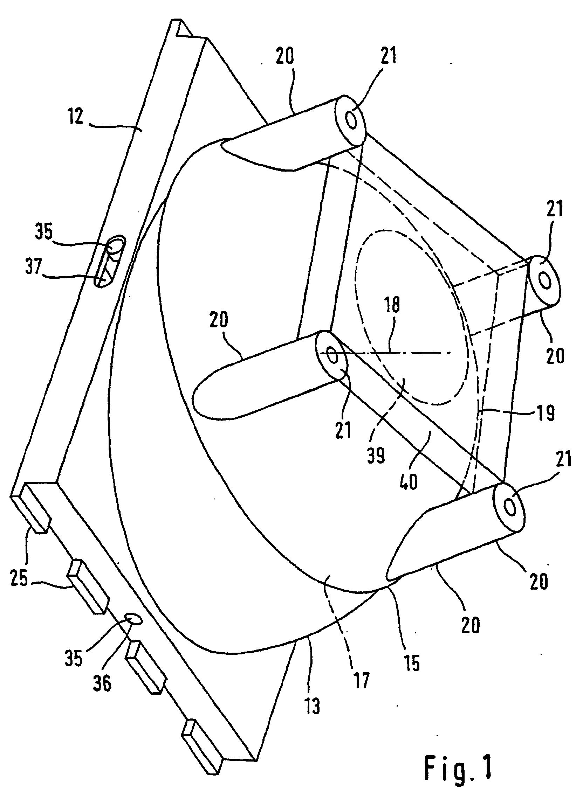

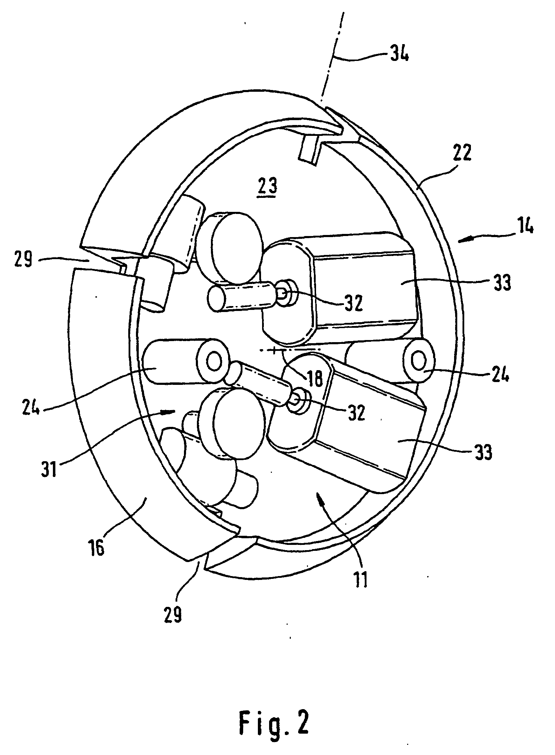

Die motorgetriebliche Anordnung der erfindungsgemäßen Verschwenkeinrichtung 11 (Fig.2) für eine Träger-Platte 12 (Fig.1) etwa zur Aufname eines motorisch verstellbaren Kraftfahrzeugrückspiegels befindet sich im Innern einer dreischaligen Kugelanordnung. Deren mittlere Schale ist eine exzentrisch zum Äquator parallel versetzte Hohlkugelzone 13. Sie ist zwischen einem innerhalb ihrer gelegenen, ebenfalls schicht- oder hohlkugelzonenförmig gestalteten Geräteträger 14 und einem außerhalb ihrer gelegenen Montagekappe 15 in Form einer hohlkugelabschnittförmigen äußeren Schale der Halterung angeordnet. Diese zweischalige Zone weist im Interesse möglichst großer Schwenkwinkel eine geringere axiale Höhe als die Hohlkugelzone 13 an der Träger-Platte 12 auf. Die so radial zwischen objektfestem Geräteträger 14 und dazu koaxialer aber axial versetzter objektfester Montagekappe 15 reibungsarm radial gehalterte Hohlkugelzone 13 ist also auf der Außenmantelfläche 16 des Geräteträgers 14 und damit zugleich in der Innenmantelfläche 17 der Montagekappe 15 in allen Richtungen aus der objektfesten Längsachse 18 heraus verschwenkbar. Diese Achse 18 verläuft koaxial durch die zweischalige Halterung, also durch deren Geräteträger 14 und deren Montagekappe 15.

Für ihre objektfeste Montage der Halterung, etwa an der Karosserie einer Kraftfahrzeug-Fahrerkabine, ist die haubenförmige Montagekappe 15 auf ihrer im äußeren Polbereich 39 zentral abgeflachten aber im übrigen im wesentlichen kugelkappenförmigen Außenfläche 19 mit achsparallelen Pfeilern 20 ausgestattet Deren freien Stirnenden 21 liegen in einer Montageebene, die wie skizziert quer zur Längsachse 18 durch den Scheitel der Montagekappe 15 orientiert ist, wenn die Achse 18 senkrecht auf der Montagefläche des tragenden Objektes (etwa einer Kfz-Karosserie) stehen soll; die aber auch jener Achse 18 gegenüber verschwenkt sein kann.

Die im wesentlichen kugelringförmig umlaufende Wand 22 des flach topfförmigen Geräteträgers 14 wird in der Ebene dessen größeren Durchmessers von einem Boden 23 überspannt. Von dem aus erstrecken sich achsparallele Sockel 24 bis in die Umgebung des Innenscheitels der hohlkugelkalottenförmigen Montagekappe 15, um hier den Geräteträger 14 unter verschwenkbarem radialem Einspannen der Platten-Hohlkugelzone 13 bewegungsstarr mit der Montagekappe 15 zu verbinden, etwa zu verrasten oder mittels Spannschrauben durch die Sockel 24 hindurch aneinander festzulegen.

Die zwischen Geräteträger 14 und Montagekappe 15 in allen Richtungen verschwenkbar gelagerte Hohlkugelzone 13 ist ihrerseits in der Ebene ihres größten Durchmessers mit der diesen radial überragenden Träger-Platte 12 in Form eines flachen, in Richtung entgegen der Halterung 15 offenen scheibenförmigen Hohlkörpers ausgestattet. Der weist an seinem Rand lappenförmig vorkragende Rastnasen 25 zur Befestigung der zu verschwenkenden Nutzfläche auf, bei der es sich insbesondere um einen Rückblick- oder um einen Laserspiegel handeln kann. In der Zeichnunngsskizze nicht zu sehen ist die Integration einer Schiebekontaktierung auf der den Spiegel tragenden Seite der Träger-Platte 13 zum automatischen Anschluß einer Widerstands-Spiegelheizung, indem die Platte mit dem Spiegel bestückt wird, ohne dafür gesonderte Anschlußklemmen o.dgl. beistellen zu müssen.

Zum extern steuerbaren Hervorrufen der Schwenkbewegung der Spiegelträger-Platte 12 relativ zur objektfesten zweischaligen Halterung ist die an der Rückseite der Träger-Platte 12 gelegene Hohlkugelzone 13 mit wenigstens einem im wesentlichen achsparallel rippenförmig radial vor ihrer Innenwand 28 vorstehenden Bogensegment 26 versehen, das durch einen L-förmigen Schlitz 29 in Wand 22 und Boden 23 des kugelzonenförmigen Geräteträgers 14 hindurch radial in dessen hohles Inneres hineinragt. Das Bogensegment 26 ist in seinem Bogeninnem, also zum Zentrum der ineinandergestaffelten Hohlkugelanordnung und damit auch zur Längsachse 18 durch den Geräteträger 14 hin gerichtet, mit einer Verzahnung 30 versehen. Diese steht über ein auf dem Boden 23 des Geräteträgers 14 gelagertes mehrstufiges Umlenk- und Untersetzungs-Getriebe 31 in Eingriff mit der parallel zum Boden 23 und somit quer zur objektfesten Längsachse 18 orientierten, aber dieser gegenüber verschwenkbaren Ausgangswelle 32 eines hochtourigen Kleinspannungs-Gleichstrommotors 33. Wenn dessen Drehbewegung das im Innern der Hohlkugelzone 13 befestigte, zu seinem Innenbogen hin verzahnte Bogensegment 26 im wesentlichen parallel zur Längsachse 18 verlagert, so daß es mehr oder weniger tief achsparallel in das Innere des Geräteträgers 14 eintaucht, wird die Hohlkugelzone 13 zwischen Geräteträger 14 und Montagekappe 15 der Halterung um eine im Prinzip radial zur Längsachse 18 gelegene Schwenkachse 34 verkippt, die quer zum rippenförmigen Bogensegment 26 orientiert ist, weil dabei dieses um jene Achse 34 eine Schwenkbewegung ausübt. Für eine dazu orthogonale Kippbewegung der Träger-Platte 12 ist eine gleichartige Anordnung und Ausbildung eines weiteren Bogensegmentes 27 vorgesehen, das längs des Umfanges der Innenwand 28 dem ersterwähnten gegenüber um 90° versetzt ist, also gerade dessen Schwenkachse 34 orthogonal kreuzt.

Damit die Orientierung der Bogensegmente 26, 27 bezüglich der objektfesten Achse 18 und damit der Verzahungseingriff zum jeweiligen Getriebe 31 auch bei demgegenüber verkippter Hohlkugelzone 13 aufrechterhalten bleibt, ist jedes Bogensegment 26, 27 mit einem Zapfen 35 um die Sehwenkachse 34 des anderen Bogensegmentes 27, 26 in der Wandung der Hohlkugelzone 13 oder wie skizziert der hohlen Träger-Platte 12 gelagert. Wenn beide Kipprichtungen einander überlagern, tendieren die Schwenkachsen 34 allerdings dazu, sich um die Längsachse 18 herum zu verdrehen. Damit das nicht zu einer Blockade der Verschwenkung der Hohlkugelzone 13 und somit des Verkippens der Träger-Platte 12 führt, ist wenigstens einer beider Schwenk-Zapfen 35 für die Bogensegmente 26, 27 nicht praktisch spielfrei in einem Rundloch 36, sondern in einem quer zu den Achsen 18 und 34 orientierten Langloch 37 gelagert, das sich also in der Ebene der Schwenkachsen 34 erstreckt, wie im einzelnen aus Fig.1 der Zeichnung ersichtlich. In dieser Ebene ist der darin gelegene Schwenk-Zapfen 34 somit unter dem Einfuß der gegenüber der montagefesten Achse 18 verschwenkten Hohlkugelzone 13 mit der damit einhergehenden Verlagerung der betreffenden Schwenkachse 34 frei beweglich.

Außer den beiden verzahnten Bogensegmenten 26, 27 für das motorische Verschwenken der Hohlkugelzone 13 relativ zur objektfesten Halterung 15 mit ihrem Geräteträger 14 ist zweckmäßigerweise zusätzlich wenigstens ein weiteres bogensegmentförmiges Stützelement 38 vorgesehen, dessen Zapfenlagerung wiederum in der Hohlkugelzone 12 koaxial zu einer der Schwenkachsen 34 in einem Rundloch 36 liegt. Dieses Element 38 dient nicht dem motorischen Antrieb, sondern vor allem einer Abstützung der Hohlkugelzone 13 und somit ihrer Träger-Platte 12 gegen ein Verkippen von den gezahnten Bogensegmenten 26, 27 außer Verzahnungseingriff fort. Darüberhinaus kann dieses Element 38 zweckmäßigerweise zugleich als Substrat zur Aufnahme eines digitalen (kodierten oder inkrementalen) oder analogen (potentiometrischen) Winkelgebers dienen, nämlich für eine Rückmeldung der momentanen Orientierung der verschwenkten Träger-Platte 12 relativ zum objektfesten Geräteträger 14.

In der Prinzipskizze Fig.1 ist noch symbolisch vereinfacht berücksichtigt, daß die Montage-Pfeiler 20 zweckmäßigerweise mit ihren Stimenden 21 einen abgeflachten äußeren Polbereich 39 der hohlkugelkappenförmigen äußeren Kugelschale, der Halterung 15, so weit überragen, daß zwischen ihnen ein flaches Schaltungsgehäuse 40 eingefügt werden kann. Dieses Flachgehäuse 40 nimmt eine jedenfalls einseitig bestückbare Platine auf (in der Zeichnungsskizze nicht sichtbar), die nicht nachbearbeitet werden muß und die der Motor-Kontaktierung dient, darüberhinaus aber gegebenenfalls auch der Aufnahme von Schaltungskomponenten für einen Datenbus zur Steuerung und Rückmeldung der Spiegelposition, und erforderlichenfalls zusätzlich eines Potentiometers.

Bei einer motorischen Verschwenkeinrichtung 11 für eine getrieblich mit einem Stell-Motor 33 in Wirkverbindung stehende, gegenüber einer objektfesten Halterung verschwenkbare Träger-Platte 12 insbesondere zur Aufnahme eines Spiegels ist also erfindungsgemäß die Platte 12 für eine stabile Lagerung bei kompakt eingebautem Schwenkantrieb an ihrer dem Spiegel abgelegenen Rückseite fest mit einer Hohlkugelzone 13 ausgestattet, die zwischen den zwei konzentrisch starr miteinander verbundenen Kugelzonenflächen einer zweischaligen Halterung, längs deren aufeinander zu weisenden Mantelflächen, verschwenkbar gelagert ist. Von den beiden starr ineinanderliegenden Kugelflächen ist die äußere als hohlkugelsegmentartige Montagekappe 15 ausgelegt, während die innere als flacher topfartiger Geräteträger 14 innerhalb seiner kugelschichtförmigen Außenmantelfläche 16 mit dem Motor 33 und dem Getriebe 31 bestückt ist, das mit einer radial zur objektfesten System-Längsachse 18 in den Innenraum des Geräteträgers 14 eingreifenden Verzahnung 30 längs einer Erzeugenden der Innenmantelfläche der Hohlkugelzone 13 in Eingriff steht.

## Patentansprüche

1. Motorische Verschwenkeinrichtung (11) mit einer gegenüber einer objektfesten Halterung in Form einer Montagekappe (15) verschwenkbar gelagerterund hohlkugelförmig ausgebauchten Träger-Platte (12-13), innerhalb derer ein Geräteträger (14) mit mindestens einem Stell-Motor (33) angeordnet ist, mittels dessen über ein zugeordnetes Getriebe (31) und eine radial in den Innenraum des Geräteträgers (14) eingreifende Verzahnung (30) an der Träger-Platte (12-13) diese relativ zur Montagekappe (15) längs sich berührender, konzentrisch angeordneter weiterer Kugel-Mantelflächen (16, 13, 17) bewegbar ist, **dadurch gekennzeichnet, daß** die Träger-Platte (12-13) mit einer Ausbauchung in Form einer Hohlkugelzone (13) ausgestattet ist, die zwischen zwei starr miteinander verbundenen weiteren Hohlkugelzonen (16, 17) verschwenkbar gehaltert ist, von denen die äußere (17) ein Teil der Montagekappe (15) ist, während radial distanziert der Geräteträger (14) als innere Hohlkugelzone (16) konzentrisch und starr mit der Montagekappe (15) verbunden ist und wobei das Getriebe (31) im Innern des Geräteträgers (14) mit der Verzahnung (30) in Eingriff steht, die mit einem Zapfen (35) an der Träger-Platte (12-13) gelagert ist und sich von der Hohlkugelzone (13) der Trägerplatte (12-13) in den Geräteträger (14) hinein erstreckt.

2. Verschwenkeinrichtung nach Anspruch 1, **dadurch gekennzeichnet, daß** zwei orthogonal zueinander orientierte Verzahnungen (30) je mit einem zugeordneten Stell-motor (31) und Getriebe (31) im Geräteträger (14) in Wirkverbindung stehen.

3. Verschwenkeinrichtung nach dem vorangehenden Anspruch, **dadurch gekennzeichnet, daß** die Verzahnungen (30) jeweils am Innenbogen eines rippenförmigen Bogensegmentes (26, 27) ausgebildet sind, das mit seinem Zapfen (35) längs der Schwenkachse (34) des anderen Bogensegmentes (27, 26) verschwenkbar an der Träger-Platte (12-13) gelagert ist.

4. Verschwenkeinrichtung nach dem vorangehenden Anspruch, **dadurch gekennzeichnet, daß** ein Zapfen (35) in einem Rundloch (36) in der Träger-Platte (12-13) verdrehbar fixiert ist, während der andere Zapfen (35) quer zum vorerwähnten Zapfen (35) orientiert in einem in der Ebene der Schwenkachsen (34-34) gelegenen Langloch (37) in der Träger-Platte (12) verlagerbar gehaltert ist.

5. Verschwenkeinrichtung nach dem vorangehenden Anspruch, **dadurch gekennzeichnet, daß** wenigstens einem der Bogensegmente (26, 27) diametral gegenüber ein weiteres Bogensegment als nicht angetriebene Stützelement (38) radial in den Geräteträger (14) eingreift.

6. Verschwenkeinrichtung nach dem vorangehenden Anspruch, **dadurch gekennzeichnet, daß** das Stützelement (38) auch als Träger für einen Stellungsgeber hinsichtlich der Verschwenkung der Träger-Platte (12-13) gegenüber dem objektfesten Geräteträger (14) dient.

7. Verschwenkeinrichtung nach einem der vorangehenden Ansprüche, **dadurch gekennzeichnet, daß** wenigstens ein gelenkig an der Hohlkugelzone (13) der Trägerplatte (12-13) festgelegtes verzahntes Bogensegment (26, 27) rippenförmig radial von der Hohlkugelzone (13) der Trägerplatte (12-13) fort durch einen L-förmigen Schlitz (29) in Boden (23) und Wand (22) des Geräteträgers (14) zum Verzahnungseingriff mit dem dort montierten Motor (33) ins Innere des Geräteträgers ( 14) hineinragt.

8. Verschwenkeinrichtung nach einem der vorangehenden Ansprüche, **dadurch gekennzeichnet, daß** die Montagekappe (15) mit dem Geräteträger (14) über Sockel (24) formschlüssig verbunden ist, die sich vom Boden (23) des Geräteträgers (14) parallel zu deren gemeinsamer Längsachse (18) bis in die Umgebung des Scheitelbereiches der Halterung (15) erstrecken.

9. Verschwenkeinrichtung nach einem der vorangehenden Ansprüche, **dadurch gekennzeichnet, daß** die Montagekappe (15) auf ihrer Außenfläche (19) mit Montage-Pfeilern (20) ausgestattet ist.

10. Verschwenkeinrichtung nach dem vorangehenden Anspruch, **dadurch gekennzeichnet, daß** zwischen den Pfeilern (20) hinter einem abgeflachten äußeren Polbereich (39) der Montagekappe (15) ein flaches Gehäuse (39) mit einer Verschaltungsplatine für den motorischen Schwenkantrieb der Träger-Platte (12-13) vorgesehen ist.

11. Verschwenkeinrichtung nach einem der vorangehenden Ansprüche, **dadurch gekennzeichnet, daß** die Träger-Platte (12-13) ihrer rückwärtigen Hohlkugelzone (13) gegenüber mit einer elektrischen Kontaktierung zum Anschluß einer Widerstandsheizung für eine hier zu montierende Spiegelfläche ausgestattet ist.

## Claims

1. Motor-driven pivoting device (11) having a support plate (12-13) which is mounted in a manner such that it can pivot relative to a holder, which is fixed to an object and is in the form of an assembly cap (15), with an outwards bulge of hollow spherical shape and within which is arranged a device carrier (14) having at least one servomotor (33) by means of which, via an associated gear mechanism (31) and a toothing (30) on the support plate (12-13) that engages radially in the interior of the device carrier (14), the said support plate can be moved relative to the assembly cap (15) along touching, concentrically arranged, further spherical casing surfaces (16, 13, 17), **characterized in that** the support plate (12-13) is provided with an outwards bulge in the form of a hollow spherical zone (13) which is secured pivotably between two further hollow spherical zones (16, 17) which are connected rigidly to each other and the outer (17) of which is part of the assembly cap (15), while, radially at a distance, the device carrier (14), as the inner hollow spherical zone (16), is connected concentrically and rigidly to the assembly cap (15), and the gear mechanism (31) in the interior of the device carrier (14) being in engagement with the toothing (30), which is mounted on the support plate (12-13) by means of a pin (35) and extends from the hollow spherical zone (13) of the support plate (12-13) into the device carrier (14).

2. Pivoting device according to Claim 1, **characterized in that** two toothings (30) which are orientated orthogonally with respect to each other are each operatively connected to an associated servomotor (33) and gear mechanism (31) in the device carrier (14).

3. Pivoting device according to the preceding claim, **characterized in that** the toothings (30) are formed in each case on the inside arc of a rib-shaped arc segment (26, 27) which is mounted on the support plate (12-13) by means of its pin (35) in a manner such that it can pivot along the pivot axis (34) of the other arc segment (27, 26).

4. Pivoting device according to the preceding claim, **characterized in that** one pin (35) is fixed rotatably in a round hole (36) in the support plate (12-13) while the other pin (35), orientated transversely with respect to the previously mentioned pin (35), is secured displaceably in an elongated hole (37), which is positioned in the plane of the pivot axes (34-34), in the support plate (12).

5. Pivoting device according to the preceding claim, **characterized in that**, diametrically opposite at least one of the arc segments (26, 27), a further arc segment engages radially in the device carrier (14) as a nondriven supporting element (38).

6. Pivoting device according to the preceding claim, **characterized in that** the supporting element (38) also serves as a carrier for a position indicator in respect of the pivoting of the support plate (12-13) relative to the device carrier (14) which is fixed to an object.

7. Pivoting device according to one of the preceding claims, **characterized in that** at least one toothed arc segment (26, 27) which is fixed in an articulated manner on the hollow spherical zone (13) of the support plate (12-13) protrudes in a rib-shaped manner radially away from the hollow spherical zone (13) of the support plate (12-13) into the interior of the device carrier (14) through an L-shaped slot (29) in the base (23) and wall (22) of the device carrier (14) for toothed engagement with the motor (33) mounted there.

8. Pivoting device according to one of the preceding claims, **characterized in that** the assembly cap (15) is connected in a form-fitting manner to the device carrier (14) via plinths (24) which extend from the base (23) of the device carrier (14), parallel in relation to their common longitudinal axis (18), into the vicinity of the apex region of the holder (15).

9. Pivoting device according to one of the preceding claims, **characterized in that** the assembly cap (15) is provided with mounting pillars (20) on its outer surface (19).

10. Pivoting device according to the preceding claim, **characterized in that** a flat housing (39) with a circuit board for the motor-driven pivoting drive of the support plate (12-13) is provided between the pillars (20) behind a flattened outer pole region (39) of the assembly cap (15).

11. Pivoting device according to one of the preceding claims, **characterized in that** the support plate (12-13) is provided, opposite its rear hollow spherical zone (13), with an electrical contact for connecting a resistance heater for a mirror surface to be mounted here.

## Revendications

1. Dispositif de pivotement motorisé (11) comprenant une plaque support (12-13) logée de manière à pouvoir pivoter par rapport à un support d'objet sous la forme d'un cache de montage (15) et évasée en forme de sphère creuse, à l'intérieur de laquelle est logé un support d'appareil (14) muni d'au moins un servomoteur (33), à l'aide duquel un engrenage associé (31) et une denture (30) qui pénètre dans le sens radial dans l'espace intérieur du support d'appareil (14) sur la plaque support (12-13) permettent de déplacer celle-ci par rapport au cache de montage (15) le long d'autres surfaces d'enveloppe sphériques (16, 13, 17) se touchant et disposées de manière concentrique, **caractérisé en ce que** la plaque support (12-13) est équipée d'un évasement sous la forme d'une zone sphérique creuse (13) qui est logée de manière à pouvoir pivoter entre deux zones sphériques creuses (16, 17) supplémentaires reliées de manière rigide entre elles dont l'extérieur (17) est une partie du cache de montage (15) alors que le support d'appareil (14) en tant que zone sphérique creuse intérieure (16) espacé dans le sens radial est relié de manière concentrique et rigide avec le cache de montage (15), et avec lequel l'engrenage (31) est en prise à l'intérieur du support d'appareil (14) avec la denture (30), laquelle est logée sur la plaque support (12-13) avec un tenon (35) et s'étend depuis la zone sphérique creuse (13) de la plaque support (12-13) à l'intérieur du support d'appareil (14).

2. Dispositif de pivotement selon la revendication 1, **caractérisé en ce que** deux dentures (30) orientées de manière orthogonale l'une par rapport à l'autre se trouvent respectivement en liaison active avec un servomoteur (31) et un engrenage (31) associés dans le support d'appareil (14).

3. Dispositif de pivotement selon la revendication précédente, **caractérisé en ce que** les dentures (30) sont à chaque fois formées sur la courbe intérieure d'un segment de courbe (26, 27) en forme de nervure qui est logé de manière à pouvoir pivoter sur la plaque support (12-13) avec son tenon (35) le long de l'axe de pivotement (34) de l'autre segment de courbe (27, 26).

4. Dispositif de pivotement selon la revendication précédente, **caractérisé en ce qu'**un tenon (35) est fixé dans un trou rond (36) dans la plaque support (12-13) de manière à pouvoir tourner, alors que l'autre tenon (35) est orienté transversalement par rapport au tenon (35) mentionné précédemment et il est maintenu de manière à pouvoir être positionné dans un trou oblong (37) dans la plaque support (12) réalisé dans le plan des axes de pivotement (34-34).

5. Dispositif de pivotement selon la revendication précédente, **caractérisé en ce qu'**au moins l'un des segments de courbe (26, 27) pénètre dans le sens radial dans le support d'appareil (14) en un point diamétralement opposé à un autre segment de courbe sous la forme d'un élément de soutien non entraîné (38).

6. Dispositif de pivotement selon la revendication précédente, **caractérisé en ce que** l'élément de soutien (38) sert également de support pour un capteur de position en vue du pivotement de la plaque support (12-13) par rapport au support d'appareil fixe (14).

7. Dispositif de pivotement selon l'une des revendications précédentes, **caractérisé en ce qu'**au moins un segment de courbe (26, 27) denté fixé de manière articulée à la zone sphérique creuse (13) de la plaque support (12-13) fait saillie en forme de nervure dans le sens radial à l'intérieur du support d'appareil (14) depuis la zone sphérique creuse (13) de la plaque support (12-13) pour continuer à travers une fente en forme de L (29) dans le fond (23) et la paroi (22) du support d'appareil. (14) pour venir s'engrener avec le moteur (33) qui y est monté.

8. Dispositif de pivotement selon l'une des revendications précédentes, **caractérisé en ce que** le cache de montage (15) est relié par engagement géométrique avec le support d'appareil (14) par le biais des socles (24), lesquels s'étendent depuis le fond (23) du support d'appareil (14) parallèlement à son axe longitudinal commun (18) jusque dans l'environnement de la zone du sommet du support (15).

9. Dispositif de pivotement selon l'une des revendications précédentes, **caractérisé en ce que** le cache de montage (15) est équipé de montants de montage (20) sur sa surface extérieure (19).

10. Dispositif de pivotement selon la revendication précédente, **caractérisé en ce qu'**entre les montants (20), derrière une zone polaire (39) extérieure aplatie du cache de montage (15), est prévu un boîtier plat (39) avec une carte de connexion pour l'entraînement motorisé du pivotement de la plaque support (12-13).

11. Dispositif de pivotement selon l'une des revendications précédentes, **caractérisé en ce que** la plaque support (12-13) est équipée à l'opposé de sa zone sphérique creuse arrière (13) d'un contact électrique destiné au raccordement d'un chauffage électrique à résistance pour une surface de miroir à monter ici.
